## Europäisches Patentamt
## European Patent Office
## Office européen des brevets

(11) Veröffentlichungsnummer: **0 139 776**
**B1**

(12)

# EUROPÄISCHE PATENTSCHRIFT

(45) Veröffentlichungstag der Patentschrift:
30.03.88

(51) Int. Cl.⁴: **F 15 B 11/02,** F 16 D 25/14,
F 16 D 25/11

(21) Anmeldenummer: 83110666.1

(22) Anmeldetag: 26.10.83

(54) Ventil.

(43) Veröffentlichungstag der Anmeldung:
08.05.85 Patentblatt 85/19

(45) Bekanntmachung des Hinweises auf die Patenterteilung:
30.03.88 Patentblatt 88/13

(84) Benannte Vertragsstaaten:
AT BE CH DE FR GB IT LI NL SE

(56) Entgegenhaltungen:
FR - A - 1 086 740
GB - A - 1 315 721
US - A - 2 721 640
US - A - 3 848 620
US - A - 3 946 760

(73) Patentinhaber: DEERE & COMPANY, 1 John Deere Road,
Moline Illinois 61265 (US)

(72) Erfinder: Halabiya, Sabah, Schumannstrasse 1,
D-6831 Rheinhausen (DE)

(74) Vertreter: Feldmann, Bernhard et al, DEERE &
COMPANY European Office, Patent Department
Steubenstrasse 36-42 Postfach 503,
D-6800 Mannheim 1 (DE)

## Beschreibung

Die Erfindung betrifft ein Ventil zum Regeln des Flüssigkeitsstromes von einer Pumpe zu einem Verbraucher mit einem Schieber, einer Blendenöffnung und einer Feder, wobei der Schieber einenends von dem Druck des Flüssigkeitsstroms und anderenends von der Feder beaufschlagt wird und in den Flüssigkeitsstrom geschaltet ist, wobei der Flüssigkeitsstrom in einer Modulierstellung des Schiebers zu Beginn der Beaufschlagung des Verbrauchers durch die Blendenöffnung und bei Erreichen eines Betriebsdruckes an dem Verbraucher in einer Betriebsstellung des Schiebers an der Blendenöffnung vorbei erfolgt.

Dieses bekannte Ventil (US-A 3 946 760) weist in einer Bohrung zwei mit jeweils einem Innenraum versehene Schieber mit zwei sich in den Innenräumen befindlichen Federn auf, wobei sich die Federn einenends an dem ihnen jeweils zugeordneten Schieber und anderenends an einer stirnseitigen Bohrungswand abstützen. Die beiden Schieber werden mittels der Federn aufeinander zugedrückt und kommen an einem die Bohrung diametral durchdringenden Anschlag zur Anlage. Die Bohrung ist mit einem von einer Pumpe kommenden Eingang und mit einem zu einem Verbraucher führenden Ausgang versehen, die in der Axialrichtung der Bohrung zueinander einen Abstand aufweisen. Der Anschlag ist im Bereich des Ausganges gelegen. Der eine Schieber ist auf seinem Aussenumfang mit einer Eindrehung versehen, die zu beiden Enden des Schiebers in einen Ringbund übergeht, wobei die Eindrehung und der Ringbund mit der Bohrung eine Blendenöffnung bilden. Wenn der eine Schieber an dem Anschlag anliegt, befindet sich die Eindrehung in einer Stellung, in der sie den Eingang mit dem Ausgang verbindet, wobei der zwischen der Wandung der Bohrung und dem einen Schieber im Bereich der Eindrehung hindurchfliessende Flüssigkeitsstrom gedrosselt wird. Sobald an dem Verbraucher der Flüssigkeitsdruck ansteigt, wird zusätzlich der andere Schieber entgegen der Wirkung seiner Feder bewegt und wirkt somit als ein zusätzliches Volumen freigebender Druckspeicher. Sobald der andere Schieber nicht mehr weiter bewegt werden kann, bewegt sich der eine Schieber in der entgegengesetzten Richtung, wobei der eine Ringbund die Durchtrittsöffnung zwischen der Wandung der Bohrung und dem einen Schieber noch zusätzlich einengt und zu einer weiteren Drosselung des Flüssigkeitsstromes führt, die aber um so mehr abnimmt, als sich der Ringbund dem Eingang nähert, und schliesslich ganz wegfällt, wenn der Ringbund an dem Eingang vorbei bewegt worden ist.

Der Nachteil dieses Ventils ist darin zu sehen, dass es zu teile- und somit auch zu kostenaufwendig ist und dass sich aufgrund der Vielzahl der Teile ungünstige Toleranzen ergeben können, die zu einer Ungenauigkeit beim Regeln des Beaufschlagungsvorganges des Verbrauchers, der sich innerhalb von Sekunden vollzieht, führen können. Ausserdem ist das durch das Verschieben des anderen Schiebers erreichte zusätzliche Volumen bei einem Verbraucher mit einer grossen Anfangsbeschickung zu gering, um beim Beaufschlagen des Verbrauchers mildernd auf den Druckanstieg einwirken zu können.

Die der Erfindung zugrunde liegende Aufgabe wird darin gesehen, das Ventil derart zu verbessern, dass es unter Beibehaltung der Drosselwirkung mit weniger Teilen auskommt und sicherer arbeitet.

Diese Aufgabe ist erfindungsgemäss dadurch gelöst worden, dass an dem Schieber einenends der Druck des ungedrosselten Flüssigkeitsstroms wirkt, die Blendenöffnung von dem Schieber getrennt ist und die Drosselung des zu dem Verbraucher fliessenden Flüssigkeitsstromes während der Verstellung des Schiebers aus seiner Modulier- in seine Betriebsstellung unverändert bleibt.

Auf diese Weise kann auf den durch den bisher verwendeten Schieber gebildeten Druckspeicher verzichtet werden, da die Drosselung des Flüssigkeitsstromes stets gleich bleibt und somit zu einem linearen Flüssigkeitsdruckanstieg an dem Verbraucher führt. Ferner konnten dadurch ein Schieber und eine Feder eingespart werden, was eine Teile- und eine Kostenreduzierung hervorruft und zu einer Erhöhung der Funktionssicherheit des Ventils führt, da weniger Toleranzen vorhanden sind. Der Bewegungsablauf des Schiebers und somit auch der Zeitpunkt, ab wann die Blendenöffnung nicht mehr wirksam ist, sind durch das Angreifen des ungedrosselten Flüssigkeitsstromes an dem Schieber genauer und einfacher bestimmbar. Selbstverständlich kann anstatt der Blendenöffnung auch eine Drosselöffnung gewählt werden.

Eine unmittelbare Anpassung der Strömungsgeschwindigkeit an das Füllverhalten des Verbrauchers und an die jeweiligen Betriebszustände erfolgt dabei auf einfache Weise dadurch, dass die Blendenöffnung in Abhängigkeit von der Stellung des Schiebers wirksam ist.

Der Zufluss der unter Druck stehenden Flüssigkeit wird dabei bei einem Ventil mit einem zu dem Verbraucher führenden Ausgang und dessen Schieber eine Ringnut aufweist, über die die Druckflüssigkeit zu dem Verbraucher geführt wird, dadurch erreicht, dass sich die Blendenöffnung in einem eine Axialbohrung aufweisenden hülsenförmigen Ansatz befindet, auf dem der Schieber verstellbar angeordnet ist, und dass die Ringnut mit der Axialbohrung zumindest zeitweise in Verbindung steht und mit dem Ausgang zu dem Verbraucher in Deckung bringbar ist.

Eine Abhängigkeit der Strömungsgeschwindigkeit von der Stellung des Schiebers wird nach einem weiteren Vorschlag der Erfindung dadurch erreicht, dass der Schieber an seinem der Axialbohrung zugelegenen Ende eine zu dieser axial ausgerichtete Sackbohrung aufweist, in die die Verbindung mit der Ringnut mündet und die teilweise einen kleineren Durchmesser als der Aussendurchmesser des hülsenförmigen Ansatzes aufweist. Um zu gewährleisten, dass bei einem Ventil mit einer die von der Pumpe geförderte unter Druck stehende Flüssigkeit dem Ventil zuführenden Leitung die Regelung des Zuflusses der unter Druck stehenden Flüssigkeit in Abhängigkeit von der Stellung des Schiebers verzögerungsfrei beginnt, sobald das Hauptsteuerventil dem Ventil unter Druck stehende Flüssigkeit zuströmen lässt, ist ferner erfindungsgemäss vorgesehen, dass die Blendenöffnung in dem hülsenförmigen Ansatz in einem Bereich des Ventils neben einem Stirnende des Schiebers vorgesehen ist und dass dieser Bereich mit der von der Pumpe kommenden Leitung unmittelbar verbunden ist. Hierdurch wird der Verbraucher zunächst sanft druckbeaufschlagt.

Für den Fall, dass der Verbraucher, bevor er voll mit Druck beaufschlagt werden kann, mit relativ viel Flüssigkeit aufgefüllt werden muss, die jedoch verzögerungsfrei in diesen einströmen soll, ist das Ventil derart ausgebildet, dass die Blendenöffnung in der Verbindung der Axialbohrung mit der Ringnut vorgesehen ist und eingangsseitig und der Blendenöffnung benachbart jeweils eine im Durchmesser grössere Bohrung in dem hülsenförmigen Ansatz angeordnet ist, d.h. der Modulierstellung wird eine Füllstellung vorgeschaltet.

Um zu vermeiden, dass bei einem Ventil mit einem zu einem Vorratsbehälter führenden Ausgang der Verbraucher nur über die Blendenöffnung, also gedrosselt, druckentlastbar ist, weist erfindungsgemäss der Schieber eine zweite in jeder Schieberstellung mit dem Ausgang für den Vorratsbehälter in Verbindung stehende Ringnut auf, über die der Vorratsbehälter mit dem Verbraucher verbindbar ist.

Die Einsatzmöglichkeiten des Ventils nach der Erfindung mit einem die oder eine weitere pumpenseitige Leitung aufnehmenden weiteren Eingang werden dadurch vergrössert, dass es mit einem zweiten Verbraucher in Verbindung steht und dass der Schieber eine in einer Ausgangsstellung des Schiebers mit dem Eingang der Pumpe und einem Ausgang für den zweiten Verbraucher in Verbindung stehende dritte Ringnut aufweist, während in der Betriebsstellung des Schiebers von dem zweiten Verbraucher zurückfliessende Flüssigkeit über die zweite Ringnut dem Vorratsbehälter zuleitbar ist, und/oder dass der hülsenförmige Ansatz als Einschraubteil ausgebildet und gegen andere hülsenförmige Ansätze mit einer grösseren oder einer kleineren Blendenöffnung austauschbar ist, wodurch der erste Verbraucher verzögert und der zweite Verbraucher verzögerungsfrei beaufschlagt wird.

Ein zweckmässiger und nicht sonderlich fertigungsaufwendiger Aufbau des Ventils wird dadurch erreicht, dass die Blendenöffnung in einer Endstellung eines Schiebers eines Hauptsteuerventils mit der Pumpe und in einer zweiten Endstellung des Schiebers über die zweite Ringnut mit dem Vorratsbehälter in Verbindung bringbar ist, wobei der Rückfluss über eine im Hauptsteuerventil vorgesehene Federkammer und eine diese mit der zweiten Ringnut ständig verbindende Leitung erfolgt, die in der die Blendenöffnung mit der Pumpe verbindenden Stellung des Schiebers über eine Ringschulter des Schiebers von einer Pumpenkammer getrennt ist, die von der Ringschulter und einer weiteren Ringschulter gebildet ist und ständig mit der Pumpe und in Abhängigkeit von der Stellung des Hauptsteuerventils mit der Blendenöffnung oder dem Eingang verbunden ist, wobei ferner die zweite Ringschulter eine derartige Länge aufweist, dass sie in der die Blendenöffnung mit der Pumpenkammer verbindenden Stellung des Hauptsteuerventils die Verbindung der Pumpenkammer mit dem Eingang verschliesst und in dieser Stellung über einen Pilotdruck der Pumpe, der gegen die Kraft einer weiteren Feder wirksam ist, gehalten wird, und wobei der Pilotdruck in einer Pilotkammer an dem stirnseitigen Ende der zweiten Ringschulter ansteht, die über die erste Ringschulter mit der Pumpenkammer oder der Federkammer in Abhängigkeit von der Stellung des Hauptsteuerventils verbindbar ist und ein mit der Pumpendruckseite verbundenes Druckbegrenzungsventil aufweist. Ein mit den wesentlichen Merkmalen dieser Erfindung versehenes Ventil kann drei Hauptstellungen einnehmen, die drei verschiedenen Betriebszuständen des Verbrauchers bzw. der Verbraucher entsprechen.

In einer ersten und als Ausgangsstellung bezeichneten Stellung steht das dem hülsenförmigen Ansatz zugelegene Ende des Schiebers über die Federkammer des Hauptsteuerventils und über die zweite Ringnut mit dem Vorratsbehälter in Verbindung und ist somit nicht druckbeaufschlagt. Der Schieber wird demgemäss von seiner Feder in seine eine der Ausgangsstellung entsprechende Endstellung verschoben und dort gehalten, wodurch auch der zu dem ersten Verbraucher führende Ausgang teilweise in Deckung mit der zweiten Ringnut gerät und somit an dem ersten Verbraucher anstehende Flüssigkeit dem Vorratsbehälter zufliessen kann. In dieser Stellung nimmt die dritte Ringnut die von der Pumpe über die Pumpenkammer des Hauptsteuerventils zugeführte unter Druck stehende Flüssigkeit auf und leitet sie dem zweiten Verbraucher ungedrosselt zu, so dass dieser unmittelbar druckbeaufschlagt wird.

Die zweite und als Modulierstellung des Ventils angesehene Stellung wird dadurch erreicht, dass das Hauptsteuerventil in einen Zustand versetzt wird, in dem die Pumpenkammer mit der zu dem blendenseitigen Ende des Schiebers führenden Leitung verbunden wird, so dass sich dort ein Druck unmittelbar aufbauen kann, der eine Verschiebung des Schiebers bewirkt. In diesem Zustand des Hauptsteuerventils wird die Verbindung der Pumpe mit dem zweiten Verbraucher durch die weitere Ringschulter, die sich dann vor dem Ausgang zu dem zweiten Verbraucher befindet, unterbrochen. In der anfänglichen Bewegungsphase des Schiebers, d.h. bis der zum ersten Verbraucher führende Ausgang die erste Ringnut schneidet, findet keine Druckbeaufschlagung des ersten Verbrauchers, sondern lediglich die Verschiebung des Schiebers statt. Sobald jedoch dieser Ausgang in Deckung mit der ersten Ringnut gerät, strömt unter Druck stehende Flüssigkeit durch die Blendenöffnung und durch die in dem hülsenförmigen Ansatz befindliche Axialbohrung der ersten Ringnut und somit dem ersten Verbraucher in geringen Mengen zu, so dass dieser zögernd druckbeaufschlagt wird. Dabei bleibt die dem ersten Verbraucher zugeführte Flüssigkeitsmenge pro Zeiteinheit nahezu konstant, solange der Schieber auf dem hülsenförmigen Ansatz gleitet und die unter Druck stehende Flüssigkeit ihren Weg durch die Blendenöffnung nehmen muss. Dies führt zu einem linearen Anstieg des Flüssigkeitsdruckes an dem ersten Verbraucher, was einem sanften und gleichmässigen Druckbeaufschlagen zuträglich ist. Über die Länge der Berührungsfläche des hülsenförmigen Ansatzes mit dem Schieber ist infolgedessen auch die Zeitdauer des langsamen Druckanstiegs regelbar. Gleichzeitig mit dem Öffnen des Ausgangs zu dem ersten Verbraucher zu der ersten Ringnut hin gerät der zu dem zweiten Verbraucher führende Ausgang in Deckung mit der zweiten Ringnut, woraufhin die an dem zweiten Verbraucher anstehende Flüssigkeit in den Vorratsbehälter abfliessen kann. Die Druckentlastung des zweiten Verbrauchers erfolgt also etwa gleichzeitig zu der Druckbeaufschlagung des ersten Verbrauchers, weshalb stets einer von beiden Verbrauchern druckbeaufschlagt ist. Sobald der Schieber unter der Wirkung des an seiner der Feder abgelegenen Endseite anstehenden Flüssigkeitsdruckes ausser Eingriff mit dem hülsenförmigen Ansatz gerät, umgeht die unter Druck stehende Flüssigkeit die Blendenöffnung und fliesst durch die in dem Schieber eingebrachte Sackbohrung der ersten Ringnut ungehindert zu, um den ersten Verbraucher vollends und ungehindert mit unter Druck stehender Flüssigkeit zu beaufschlagen. Wenn die unter Druck stehende Flüssigkeit dem ersten Verbraucher ungehindert zufliessen kann, dann befindet sich der Schieber in seiner dritten Stellung, die der Betriebsstellung entspricht und die er so lange beibehält, wie der erste Verbraucher unter Druck steht. Soll der erste Verbraucher druckentlastet und der zweite Verbraucher druckbeaufschlagt werden, dann wird durch die Verstellung des Hauptsteuerventils eine Verbindung der blendenseitigen Seite des Schiebers mit dem Vorratsbehälter wiederum über die Federkammer des Hauptsteuerventils und die zweite Ringnut bewirkt. Dies kann auf einfache Weise durch ein manuelles Betätigen des Hauptsteuerventils erfolgen, oder es kann dadurch erreicht werden, dass der das Hauptsteuerventil in seinem die unter Druck stehende Flüssigkeit dem ersten Verbraucher zuführenden Zustand haltende Pilotdruck unter einen vorbestimmten Wert abfällt, so dass die weitere Feder eine Verschiebung der Ringschultern in dem Hauptsteuerventil hervorruft, und zwar zurück in eine Stellung, in der der Schieber blendenöffnungsseitig druckentlastet wird. Wenn an dem Schieber blendenöffnungsseitig keine unter Druck stehende Flüssigkeit ansteht, bewirkt die anderenends an dem Schieber anliegende Feder dessen Zurückbewegen in die Ausgangsstellung. Auf dem Weg dorthin wird die von dem ersten Verbraucher zurückfliessende Flüssigkeit zunächst über die erste Ringnut, die Radialbohrung, die Axialbohrung, die Blendenöffnung, die Federkammer des Hauptsteuerventils, die zweite Ringnut und die dazwischen liegenden Leitungen dem Vorratsbehälter zugeführt. Das Zurückströmen der Flüssigkeit durch die Blendenöffnung hat den Vorteil, dass der erste Verbraucher auch sanft druckentlastet wird, um durch ein plötzliches Losbrechen eventuell entstehende Massenkräfte zu vermeiden. Die von dem ersten Verbraucher zurückfliessende Flüssigkeit nimmt so lange ihren Weg durch die Blendenöffnung, bis der zu ihm führende Ausgang in die zweite Ringnut mündet und somit eine Verbindung zu dem Vorratsbehälter herstellt. Sobald der Ausgang aus dem Bereich der ersten Ringnut gelangt, beginnt der Zufluss der unter Druck stehenden Flüssigkeit zu dem zweiten Verbraucher über die dritte Ringnut.

In der Zeichnung sind zwei nachfolgend näher beschriebene Ausführungsbeispiele nach der Erfindung dargestellt.

Es zeigt:

Fig. 1 eine schematische Darstellung eines Hydraulikkreislaufes mit einem erfindungsgemässen Ventil zum Modulieren eines Flüssigkeitsdruckes,

Fig. 2 das Venteil und ein Hauptsteuerventil im Längsschnitt und in einer Baueinheit vereinigt,

Fig. 3 eine ähnliche Darstellung wie in Fig. 2, jedoch einen anderen Betriebszustand zeigend,

Fig. 4 ein weiteres Ausführungsbeispiel für das Ventil.

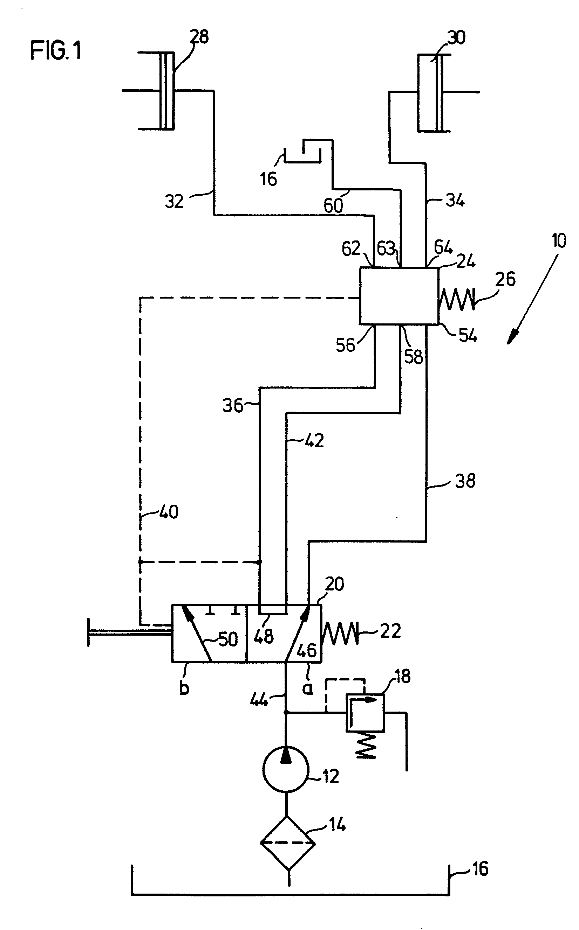

Ein in Fig. 1 gezeichneter Flüssigkeits- oder Hydraulikkreislauf 10 beinhaltet eine Pumpe 12, die über ein Filter 14 Flüssigkeit, wie Hydrauliköl, aus einem Vorratsbehälter 16 ansaugt. Stromabwärts der Pumpe 12 folgt ein Druckbegrenzungsventil 18 und ein wahlweise betätigbares, jedoch auch druckabhängig steuerbares Hauptsteuerventil 20, das mittels einer Feder 22, die als Druckfeder wirkt, in seine in Fig. 1 wiedergegebene linke Position vorgespannt ist und mit einem als Druckmodulationsventil wirkenden Ventil 24 in Verbindung steht, das ebenfalls über eine Feder 26, wiederum in Form einer Druckfeder, mit Bezug auf Fig. 1 nach links vorgespannt ist. Dem Ventil 24 ist ein erster und ein zweiter einfach wirkender Verbraucher 28 und 30 nachgeschaltet. Diese sind über Leitungen 32, 34 mit dem Ventil 24 verbunden und können als Hydraulikzylinder, Hydraulikmotore, Ventile oder druckbeaufschlagbare Kupplungen ausgebildet sein. Zwischen dem Hauptsteuerventil 20 und dem Ventil 24 erstrekken sich zwei weitere Leitungen 36, 38, wobei von der Leitung 36 eine Pilotleitung 40 abzweigt, die die jeweils den Federn 22 und 26 gegenüberliegenden Seiten sowohl des Hauptsteuerventils 20 als auch des Ventils 24 druckbeaufschlagt. Ferner ist zwischen dem Hauptsteuerventil 20 und dem Ventil 24 eine Leitung 42 und zwischen der Pumpe 12 und dem Hauptsteuerventil 20 eine Leitung 44 vorgesehen. Das Hauptsteuerventil 20 ist als ein 4/2-Wegeventil ausgebildet und in eine End-Stellung a und eine End-Stellung b verschiebbar.

In der End-Stellung a verbindet ein Durchlass 46 im Hauptsteuerventil 20 die von der Pumpe 12 kommende Leitung 44 mit der zum Ventil 24 führenden Leitung 38 und eine im Hauptsteuerventil 20 vorgesehene Brücke 48 die Leitung 42 mit der ebenfalls zum Ventil 24 führenden weiteren Leitung 36. Befindet sich das Hauptsteuerventil 20 in seiner mit b bezeichneten End-Stellung, dann ist die Leitung 44 über einen Durchlass 50 im Hauptsteuerventil 20 mit der Leitung 36 verbunden, während die Verbindung der Leitung 42 durch das Hauptsteuerventil 20 unterbrochen ist. Das Hauptsteuerventil 20 kann durch elektrische, hydraulische oder unmittelbar durch Hand- bzw. Fussbetätigung in seine End-Stellungen a und b verstellt werden. Falls in der Pilotleitung 40 kein Druck ansteht, befindet sich das Hauptsteuerventil 20 infolge der Feder 22 in seiner Stellung a.

Das Ventil 24 weist drei Eingänge 54, 56, 58 für die Leitungen 38, 36 und 42 und zwei Ausgänge 62 und 64 für die Leitungen 32 und 34 und einen weiteren Ausgang 63, der mit einer zu dem Vorratsbehälter 16 führenden Abflussleitung 60 verbunden ist, auf und kann grundsätzlich drei Hauptstellungen einnehmen.

In der ersten Stellung nämlich der Ausgangsstellung, sind der Eingang 54 mit dem Ausgang 64, der Eingang 58 mit dem Ausgang 63 und der Ausgang 62 mit dem Ausgang 63 verbunden, während der Eingang 56 gesperrt ist. In der zweiten Stellung, der Modulierstellung, sind der Eingang 54 mit dem Ausgang 64, der Eingang 58 mit dem Ausgang 63 und der Eingang 56 mit dem Ausgang 62 verbunden, wobei zusätzlich noch die Ausgänge 63 und 64 miteinander in Verbindung stehen und in der Verbindung zwischen dem Eingang 56 und dem Ausgang 62 eine Drosselung der durchtretenden Druckflüssigkeit stattfindet.

Die dritte als Betriebsstellung anzusehende Stellung nimmt mit der zweiten mit der Ausnahme überein, dass in der Verbindung zwischen dem Eingang 56 und dem Ausgang 62 keine Drosselwirkung auftritt.

Ist die Pilotleitung 40 drucklos, dann befindet sich aufgrund der Wirkung der Feder 26 das Ventil 24 in seiner ersten Stellung.

Infolge der Pilotleitung 40 und der damit gegebenen Pilotsteuerung stellt sich das Ventil 24 in Abhängigkeit von der Stellung des Hauptsteuerventils 20 selbsttätig in eine seiner drei Hauptstellungen ein, wobei der Übergang von der Ausgangsstellung in die Modulier-Stellung bzw. umgekehrt fliessend ist. Befindet sich das Hauptsteuerventil 20 in seiner End-Stellung a, dann befindet sich das Ventil 24 in seiner Ausgangs-Stellung. In dieser gelangt unter Druck stehende Flüssigkeit von der Pumpe 12 über die Leitung 44, den Durchlass 46, die Leitung 38 und die Leitung 34 zu dem zweiten Verbraucher 30. Flüssigkeit aus dem ersten Verbraucher 28 fliesst durch die Leitung 32 und die Verbindung der Auslässe 62 und 63 über die Abflussleitung 60 in den Vorratsbehälter 16. In der Pilotleitung 40 herrscht kein Druck, da die Leitung 36 über die Brücke 48 an die Leitung 42 angeschlossen ist, die wiederum über den Eingang 58, den Ausgang 63 und die Abflussleitung 60 an den Vorratsbehälter 16 angeschlossen ist. Die Feder 26 hält das Ventil 24 in der Ausgangs-Stellung fest.

Wird das Hauptsteuerventil 20 in seine End-Stellung b bewegt, dann fördert die Pumpe 12 unter Druck stehende Flüssigkeit durch den Durchlass 50, die Leitung 36 und damit in die Pilotleitung 40, wobei der Eingang 56 noch gesperrt ist. Der sich in der Pilotleitung 40 aufbauende Druck sorgt dafür, dass das Hauptsteuerventil 20 in seiner End-Stellung b gehalten wird und dass sich das Ventil 24 aus seiner ersten Stellung heraus in Richtung auf seine Betriebs-Stellung bewegt und zunächst als Zwischenstellung die Modulier-Stellung einnimmt. Bei weiterem Druckaufbau in der Pilotleitung 40 verschiebt sich dann das Ventil 24 weiter entgegen der Wirkung der Feder 26 in seine Betriebs-Stellung. Sobald diese Stellung erreicht ist, wird der zweite Verbraucher 30 über die Leitung 34, die Verbindung der Ausgänge 64 und 63 über die Abflussleitung 60 zum Vorratsbehälter 16 hin geöffnet. Gleichzeitig wird der erste Verbraucher 28 langsam mit Druckflüssigkeit gefüllt, weil in der Verbindung zwischen dem Eingang 56 und dem Ausgang 62 die Drosselung stattfindet. Dort wird der erste Verbraucher 28 mit dem ganzen zur Verfügung stehenden Druck und der zur Verfügung stehenden Flüssigkeitsmenge beaufschlagt. Die Zeit zum vollen Beaufschlagen des ersten Verbrauchers 28 mit unter Druck stehender Flüssigkeit ist über die Stärke der Drosselung und über die Stärke der Feder 26 regelbar. Es kann daher in manchen Anwendungsfällen auch von Vorteil sein, die Drosselung wie auch die Feder 26 in ihrer Wirkung variabel auszubilden. Soll wiederum der zweite Verbraucher 30 mit unter Druck stehender Flüssigkeit versorgt werden, so ist das Hauptsteuerventil 20 in seine End-Stellung a entgegen dem Pilotdruck zu verschieben, wobei der Pilotdruck über das Druckbegrenzungsventil 18 abgebaut wird und das Hauptsteuerventil 20 von der Feder 22 in seiner End-Stellung a gehalten wird. Aufgrund des in der Pilotleitung 40 abfallenden Druckes wird auch das Ventil 24 von der Feder 26 in seine Betriebs-Stellung verschoben, und der für die Ausgangs-Stellung beschriebene Zustand tritt wieder ein.

Sollte aus irgendeinem Grunde der von der Pumpe 12 aufgebaute Druck unter einen vorbestimmten Wert abfallen, dann bewegt die Feder 22 das Hauptsteuerventil 20 in seine End-Stellung a und die Feder 26 das Ventil 24 in seine Ausgangs-Stellung. Die Verwendung des Ventils 24 führt zu einem sanften und langsamen Beaufschlagen des ersten Verbrauchers 28 und zu einem relativ verzögerungsfreien Beaufschlagen mit Druckflüssigkeit des zweiten Verbrauchers 30. Ferner wird eine rasche Entleerung des jeweiligen Verbrauchers 28 oder 30 erreicht, wenn er nicht druckbeaufschlagt ist. Die Verbraucher 28, 30 sind dabei so geschaltet, dass stets einer von beiden mit Druckflüssigkeit versorgt wird.

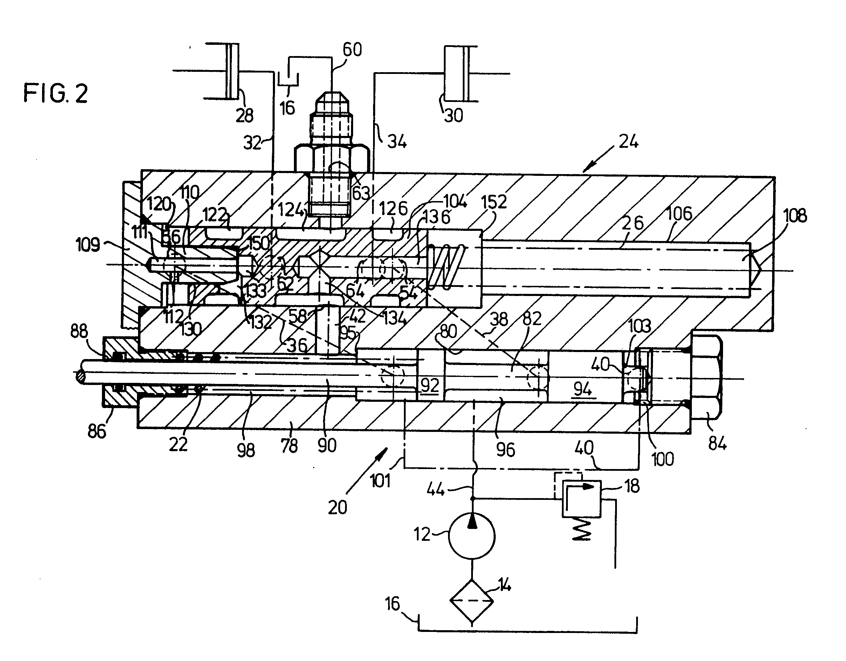

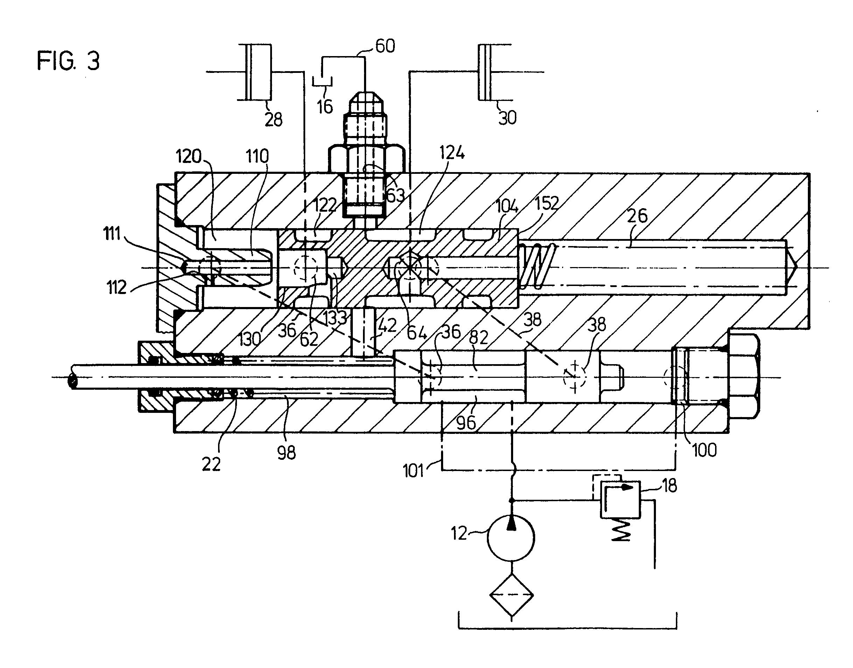

In den Figuren 2 und 3 sind das Hauptsteuerventil 20 und das Ventil 24 zu einer Einheit zusammengefasst, wobei in Fig. 2 das Hauptsteuerventil 20 in seiner End-Stellung a und das Ventil 24 in seiner Ausgangs-Stellung dargestellt sind. Fig. 3 zeigt das Hauptsteuerventil 20 in seiner End-Stellung b und das Ventil 24 in seiner Betriebs-Stellung.

Im einzelnen ist aus Fig. 2 zu erkennen, dass das Hauptsteuerventil 20 ein Gehäuse 78 mit einer zylindrischen Bohrung 80 aufweist, die einen Schieber 82 aufnimmt, der flüssigkeitsdicht darin eingepasst ist. Die Bohrung 80 ist einends über einen Schraubstopfen 84 und anderenends von einem einschraubbaren Deckel 86, der eine zentrische Bohrung 88 aufweist, verschlossen. Der Schieber 82 hat einen relativ dünnen Schaft 90, der einenends zur Betätigung des Schiebers 82 dazu durch die zentrische Bohrung 88 in dem Deckel 86 flüssigkeitsdicht nach aussen ragt und im Innern der Bohrung 80 eine erste, schmale und eine weitere breite, gegenseitigen Abstand aufweisende Ringschulter 92 und 94 trägt. Die Ringschultern 92 und 94 sind mit Abstand zu dem innen liegenden Ende des Schaftes 90 und dem Deckel 86 angeordnet. Die schmale Ringschulter 92, die als Ringkolben ausgebildet sein kann, ist dem Deckel 86 zugelegen, kann gegen einen Anschlag 95 in der Bohrung 80, die hierzu abgesetzt ausgebildet ist, zur Anlage kommen und nimmt zwischen sich und dem Deckel 86 die Feder 22 auf.

Die Pilotleitung 40 und die Leitungen 36, 38, 42 und 44 münden in die Bohrung 80, wobei der Abstand zwischen den Ringschultern 92 und 94 derart gewählt ist, dass die Leitung 44 unabhängig von der jeweiligen Stellung des Schiebers 82 immer den nachfolgend als Pumpenkammer 96 bezeichneten Bereich zwischen den Ringschultern 92, 94 beaufschlagen kann, und die Leitung 42 ist so in einem nachfolgend als Federkammer 98 bezeichneten Bereich angeordnet, dass sie stets zwischen der jeweiligen Stellung der schmalen Ringschulter 92 und dem Deckel 86 in die Bohrung 80 mündet. Die Pilotleitung 40 mündet in einen nachfolgend als Pilotkammer 100 bezeichneten Bereich zwischen der breiten Ringschulter 94 und dem Schraubstopfen 84. Je nach der Stellung des Schiebers 82 sind die Federkammer 98 und die Pilotkammer 100 in ihrem Volumen veränderlich, während die Pumpenkammer 96 in ihrer Grösse konstant bleibt. Der Schieber 82 ist derart verschiebbar, dass die Pumpenkammer 96 mit der Leitung 36 oder mit der Leitung 38 verbunden ist. Ferner mündet in die Bohrung 80, und zwar mit Bezug auf Fig. 2, in die Federkammer 98 unmittelbar vor der Ringschulter 92 noch ein Abzweig 101 der Pilotleitung 40.

Damit steht die Pilotleitung 40 in Abhängigkeit von der Stellung des Schiebers 82 ständig mit der Pilotkammer 100 und entweder mit der Federkammer 98 oder mit der Pumpenkammer 96 in Verbindung, sofern sie nicht von der Ringschulter 92 verschlossen wird. Das über die breite Ringschulter 94 hinausragende Ende 103 des Schaftes 90 weist eine Länge auf, so dass die Pilotleitung 40 nicht von der Ringschulter 94 blockiert werden kann. Die Ringschulter 94 weist eine derartige Breite auf, dass in der End-Stellung a des Hauptsteuerventils 20 die Leitung 38 freigegeben und in der End-Stellung b, d.h., wenn die Ringschulter 92 gegen den Anschlag 95 anliegt, diese blockiert wird. Das Ventil 24 ist in dem Gehäuse 78 angeordnet und weist einen Schieber 104, die Feder 26, eine Sackbohrung 106 mit einem geschlossenen Ende 108 und eine Drosseleinrichtung 109 auf. In das offene Ende der Sackbohrung 106 ist die Drosseleinrichtung 109 eingeschraubt, die an die Drosseleinrichtung 109 anschliessend den Schieber 104 und zwischen dem Schieber 104 und dem geschlossenen Ende 108 die Feder 26 derart aufnimmt, dass sie den Schieber 104 in Richtung auf die Drosseleinrichtung 109 drückt. Die Drosseleinrichtung 109 selbst trägt auf ihrer dem Schieber 104 zugewandten Seite einen hülsenförmigen Ansatz 110 mit einem wesentlich kleineren Durchmesser als der der Sackbohrung 106. In den Ansatz 110 ist eine geschlossene Axialbohrung, also eine Sackbohrung 111, eingearbeitet, die schieberseitig offen ist und in die eine sich radial erstreckende Blendenöffnung 112 mündet.

In die Sackbohrung 106 münden ferner die Eingänge 54, 56 und 58 und die Ausgänge 62, 64 und 63, jeweils mit gegenseitigem Abstand. Im einzelnen mündet der Eingang 56 für die mit der Pilotleitung 40 verbundene Leitung 36 in einen dem blendenseitigen Ende der Sackbohrung 106 zugeordneten Ringraum 120 und wird gefolgt von dem Ausgang 62, dem Eingang 58, dem Ausgang 63, dem Ausgang 64 und dem Eingang 54, wobei letztere sich teilweise überlappen.

Was den Schieber 104 anbelangt, so weist dieser jeweils eine im folgenden als blendenseitige, mittlere und federseitige bezeichnete Ringnut 122, 124 und 126 auf. Ausserdem ist in sein blendenseitiges Ende eine zentrische axial ausgerichtete Sackbohrung 130, die eine Axialbohrung ist, deren Durchmesser ein Gleiten auf dem hülsenförmigen Ansatz 110 der Drosseleinrichtung 109 ermöglicht und die über eine Radialbohrung 132 in die blendenseitige Ringnut 122 führt, eingebracht. Dabei ist die Sackbohrung 130 abgesetzt ausgebildet und weist ein geschlossenes Ende 133 mit gegenüber der Sackbohrung 130 verkleinertem Durchmesser auf, wobei die Radialbohrung 132 einen Durchmesser aufweist, der sowohl die Sackbohrung 130 als auch das geschlossene Ende 133 schneidet.

An dem der Sackbohrung 130 abgelegenen Ende des Schiebers 104 ist in diesen eine weitere Axialbohrung 136 eingebracht, deren geschlossenes Ende über eine Radialbohrung 134 mit der mittleren Ringnut 124 in Verbindung steht. Auch die Sackbohrung 106 ist abgesetzt ausgebildet und weist in Richtung auf ihr geschlossenes Ende hin einen Teil kleineren Durchmessers auf, wodurch sich ein Absatz 152 ergibt, der die Schiebebewegung mit Bezug auf Fig. 2 nach rechts begrenzt, wobei die nach links gerichtete Schiebebewegung durch eine Stirnseite 150 des hülsenförmigen Ansatzes 110 begrenzt wird. In dieser Stellung besteht immer eine Verbindung von der blendenseitigen Ringnut 122 über die Radialbohrung 132, das Ende 133, die Sackbohrung 111 und die Blendenöffnung 112 mit dem Ringraum 120. Der Eingang 56 ist dabei in der Sackbohrung 106 derart anzuordnen, dass er immer zu dem Ringraum 120 hin offen ist. Der dem Eingang 56 folgende Ausgang 62 ist derart anzuordnen, dass er in der linken Endstellung des Schiebers 104 von der blendenseitigen Ringnut 122 getrennt ist, aber mit der mittleren Ringnut 124 Verbindung hat. Die mittlere Ringnut 124 weist eine Breite auf, dass sie in jeder Schieberstellung mit dem zum Vorratsbehälter 16 führenden Ausgang 63 verbunden ist und auch zu dem Eingang 58. Die federseitige Ringnut 126 ist so anzuordnen, dass sie in der linken Endstellung des Schiebers 104 zu dem Eingang 54 und dem Ausgang 64 hin offen ist.

Aus dem Vorbeschriebenen ergibt sich folgende Funktion. Bei nicht arbeitender Pumpe 12, also drucklosem Hydraulikkreislauf 10, befindet sich das Hauptsteuerventil 20 in seiner End-Stellung a und das Ventil 24 in seiner Ausgang-Stellung. Diese Stellungen sind in Fig. 2 wiedergegeben. Wird die Pumpe 12 eingeschaltet, so erfolgt ein unter Druck stehender Flüssigkeitsfluss von der Pumpe 12 über die Leitung 44 in die Pumpenkammer 96, die Leitung 38, den Eingang 54, die federseitige Ringnut 126 und die Leitung 34 zu dem zweiten Verbraucher 30. Damit wird dieser druckbeaufschlagt. Der erste Verbraucher 28 ist in diesem Zustand drucklos, da über die Leitung 32, den Ausgang 62, die mittlere Ringnut 124, den Ausgang 63 und die Abflussleitung 60 eine Verbindung zu dem Vorratsbehälter 16 hin besteht. Die Pilotleitung 40 ist dabei über den Abzweig 101 mit der Federkammer 98, in die auch die Leitung 36 mündet, verbunden und dadurch, dass in die Federkammer 98 die Leitung 42 eintritt, über den Eingang 58, die mittlere Ringnut 124 und den Ausgang 63 ebenfalls mit dem Vorratsbehälter 16 verbunden, so dass sich in dem Ringraum 120 am linksseitigen Ende des Schiebers 104 kein Druck aufbauen kann und dieser über die Feder 26 in seiner Stellung gehalten wird. Infolge der drucklosen Verbindung der Pilotleitung 40 mit dem Vorratsbehälter 16 kann sich auch am rechten Ende des Hauptsteuerventils 20 kein Druck aufbauen, so dass dieses über die Feder 22 in seiner End-Stellung a gehalten wird.

Soll nun anstatt des zweiten Verbrauchers 30 der erste Verbraucher 28 mit unter Druck stehender Flüssigkeit beaufschlagt werden, so wird der Schieber 82 des Hauptsteuerventils 20 aus seiner End-Stellung a in seine in Fig. 3 wiedergegebene End-Stellung b verschoben, d.h., er wird aus seiner rechten Endstellung in seine linke entgegen der Wirkung der Feder 22 bewegt. In der End-Stellung b nimmt die Pumpenkammer 96 eine Stellung ein, in der die Leitung 36 zu ihr und zu dem Abzweig 101 offen ist. Damit gelangt von der Pumpe 12 unter Druck stehende Flüssigkeit in die Pilotkammer 100, wodurch der Schieber 82 entgegen der Kraft der Feder 22 in seiner linken Endstellung gehalten wird. Solange sich der Schieber 82 in dieser Stellung befindet, fliesst unter Druck stehende Flüssigkeit über die Pumpenkammer 96, die Leitung 36 in den Ringraum 120 zum blendenseitigen Ende des Schiebers 104 und bewegt den Schieber 104 entgegen der Kraft der Feder 26 aus seiner in Fig. 2 dargestellten Ausgangs-Stellung in Richtung auf seine in Fig. 3 dargestellte Betriebs-Stellung, die der dritten Stellung entspricht. Während dieses Verschiebevorgangs und solange die Sachbohrung 130 noch auf dem hülsenförmigen Ansatz 110 gleitet, tritt die unter Druck stehende Flüssigkeit durch die Blendenöffnung 112, die Sackbohrung 111, das Ende 133 über die Radialbohrung 132 in die blendenseitige Ringnut 122 ein. Sobald die blendenseitige Ringnut 122 sich zu dem Ausgang 62 hin etwas öffnet, wird der erste Verbraucher 28 zunächst mit einem geringen Druck, der sich bei vollständiger Überdeckung bis auf den Maximaldruck erhöht, beaufschlagt. Gleichzeitig entsteht für den zweiten Verbraucher 30 eine Verbindung zu dem Vorratsbehälter 16, weil nämlich die Breite der mittleren Ringnut 124 derart gewählt ist, dass bereits in dieser Stellung eine Überdeckung mit dem Ausgang 64 stattfindet. Der Rücklauf erfolgt damit aus dem zweiten Verbraucher 30 über die Leitung 34, den Ausgang 64, die mittlere Ringnut 124, den Ausgang 63 und die Abflussleitung 60. Die Leitung 38 ist in dieser Stellung durch die breite Ringschulter 94 blockiert. Die Stellung des Ventils 24 entspricht dabei der Modulier-Stellung, d.h., der erste Verbraucher 28 wird sanft eingerückt, während der zweite Verbraucher 30 bereits zum Vorratsbehälter 16 hin entlüftet ist. Auch in dieser Stellung ist die Leitung 42 zum Vorratsbehälter 16 hin geöffnet. Bei weiterem Druckaufbau wird der Pilotdruck in dem Ringraum 120 den Schieber 104 vollständig bis gegen den Absatz 152, d.h. bis in seine dritte Stellung, verschieben, in der dann die unter Druck stehende Flüssigkeit zusätzlich an dem hülsenförmigen Ansatz 110 vorbei direkt zu dem Ausgang 62 strömt, der dann auch vollständig offen ist, d.h., in dieser Stellung findet keine Drosselung mehr statt. Steht der erste Verbraucher 28 unter Druck, so wird der höchstmögliche Flüssigkeitsdruck wie auch bei der Druckbeaufschlagung des zweiten Verbrauchers 30 von der Einstellung des Druckbegrenzungsventils 18 bestimmt.

Dabei sind der höchstmögliche Flüssigkeitsdruck und die Kraft der Feder 26 bzw. die Lage des Absatzes 152 so aufeinander abzustimmen, dass die blendenseitige Ringnut 122 nicht an dem Ausgang 63 der Abflussleitung 60 geöffnet wird. Soll der erste Verbraucher 28 wieder druckentlastet werden, so wird das Hauptsteuerventil 20 wieder in seine End-Stellung a nach Fig. 2 gegen den Pilotdruck zurückverschoben, der sich dann über das Druckbegrenzungsventil 18 abbaut. In dem Augenblick, in dem die Leitung 36 von der schmalen Ringschulter 92 freigegeben wird und damit einen Verbindung über die Leitung 42 zum Vorratsbehälter 16 entsteht, wird auch der Pilotdruck in dem Ringraum 120 abgebaut, und die Feder 26 kann den Schieber 104 in seine erste Stellung zurückverstellen. Da der Eintritt des Abzweigs 101 in etwa in der gleichen Ebene wie der Eintritt der Leitung 36 in die zylindrische Bohrung 80 liegt, wird etwa gleichzeitig der Pilotdruck in der Pilotkammer 100 nicht mehr über das Druckbegrenzungsventil 18, sondern ebenfalls über die Leitung 42 abgebaut.

In den Figuren 2 und 3 sind der Einfachheit halber die Leitungen 36, 38, 32, 34 und der Abzweig 101 nur strichpunktiert angedeutet.

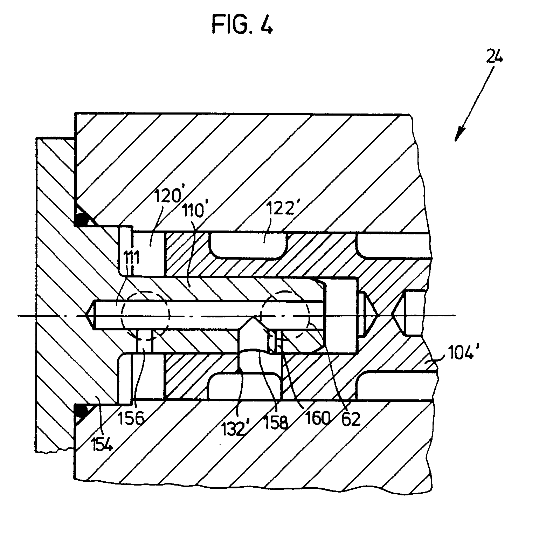

In Fig. 4 ist eine vom Prinzip her gleiche Drosseleinrichtung 154 wie die in den Figuren 2 und 3 gezeigte Drosseleinrichtung 109 dargestellt; sie ist aber so ausgebildet, dass sie ein anderes Füllverhalten des ersten Verbrauchers 28 ergibt. Mit der vorbeschriebenen Ausführungsform übereinstimmende Teile sind mit einem ' versehen. Der hülsenförmige Ansatz 110' weist nunmehr drei axial voneinander getrennte Bohrungen oder Blendenöffnungen 156, 158, 160 auf, die einenends alle in die Sackbohrung 111' münden, wobei die ersten beiden 156 und 158 einen nahezu gleichen Querschnitt aufweisen, der allerdings erheblich grösser ist als der der Blendenöffnung 112, deren Querschnitt der dritten Blendenöffnung 160 in etwa entspricht. In der ersten in Fig. 4 wiedergegebenen Stellung des Ventils 24 verbinden die zweite und dritte Blendenöffnung 158 und 160 die Sackbohrung 111 mit der blendenseitigen Ringnut 122' über die in den Schieber 104' eingearbeitete Radialbohrung 132'. Der Ausgang 62 kann bei dieser Ausführungsform ebenso angeordnet sein wie bei der vorbeschriebenen oder bereits in der ersten Stellung mit der blendenseitigen Ringnut 122' in Verbindung stehen. Geht man von der letzteren Anordnung aus, so wird bei Druckbeaufschlagung des Ringraumes 120' sofort eine grosse Menge unter Druck stehender Flüssigkeit durch die Blendenöffnung 156, die Sackbohrung 111' und die Blendenöffnungen 158 und 160 in die blendenseitige Ringnut 122' und je nach der Überlappung zum ersten Verbraucher 28 strömen. Das bedeutet, dass zwischen die Ausgangsstellung und die Modulierstellung eine Füllstellung eingefügt bzw. der Ausgangsstellung eine Füllstellung überlagert wird. Gleichzeitig wird sich der Schieber 104' nach rechts in seine Modulier-Stellung verschieben, wobei zunächst die zweite Blendenöffnung 158 durch den Schieber 104' mehr und mehr verschlossen wird, bis schliesslich in der Modulierstellung, die der zweiten Stellung entspricht, die Verbindung der Sackbohrung 111' zur blendenseitigen Ringnut 122' nur noch über die dritte den reduzierten Durchmesser aufweisende Blendenöffnung 160 erfolgt und das aus der Beschreibung der Fig. 2 und 3 hervorgehende Füllverhalten eintritt. Danach setzt sich die Bewegung des Schiebers 104' mit Blick auf Fig. 4 nach rechts so lange fort, bis die rechte Stirnfläche der Drosseleinrichtung 154 und der Radialbohrung 132' in Deckung gerät. Ab diesem Zeitpunkt hat der Schieber 104' seine Betriebsstellung eingenommen, und die Flüssigkeit fliesst endseitig aus der Sackbohrung 111 direkt in die Radialbohrung 132'. Daraus folgt, dass zunächst der Verbraucher voll beaufschlagt wird und bei weiterer Verschiebung des Schiebers 104' eine Drosselwirkung auftritt. Der Rücklauf erfolgt in umgekehrter Reihenfolge.

Die Ausführungsform nach den Figuren 1 bis 3 ist für Hydraulikkreisläufe konzipiert, bei denen ein Verbraucher weich und der zweite Verbraucher schlagartig druckbeaufschlagt werden soll. Diese Ausführungsform eignet sich vorzüglich für Ackerschlepper mit einer Zapfwelle für den Geräteantrieb, wobei über den ersten Verbraucher 28 die Zapfwelle weich eingerückt wird, wodurch das Gerät langsam angetrieben wird, und über den zweiten Verbraucher 30 die Zapfwelle schlagartig abgebremst wird, was beispielsweise bei Störungen und Gefahrenmomenten besonders von Vorteil ist. Insbesondere ermöglicht es diese Ausführungsform, dass bei Störungen, wie z.B. Druckabfall im Hydraulikkreislauf 10, die Zapfwelle automatisch abgebremst wird. Andere Anwendungsgebiete ergeben sich bei Lastschaltgetrieben mit hydraulisch schaltbaren Planetengetrieben.

Die zweite Ausführungsform eignet sich besonders für Hydraulikkolben mit einem langen Leerhub oder Hydraulikmotoren, die erst mit einer grösseren Menge unter Druck stehender Flüssigkeit gefüllt werden müssen, beispielsweise um eine bestimmte Drehzahl zu erreichen, bevor sie ein Antriebsmoment entwickeln.

**Patentansprüche**

1. Ventil (24) zum Regeln des Flüssigkeitsstromes von einer Pumpe (12) zu einem Verbraucher (28) mit einem Schieber (104), einer Blendenöffnung (112) und einer Feder (26), wobei der Schieber (104) einenends von dem Druck des Flüssigkeitsstroms und anderenends von der Feder (26) beaufschlagt wird und in den Flüssigkeitsstrom geschaltet ist, wobei der Flüssigkeitsstrom in einer Modulierstellung des Schiebers (104) zu Beginn der Beaufschlagung des Verbrauchers (28) durch die Blendenöffnung (112) und bei Erreichen eines Betriebsdruckes an dem Verbraucher (28) in einer Betriebsstellung des Schiebers (104) an der Blendenöffnung (112) vorbei erfolgt, dadurch gekennzeichnet, dass an dem Schieber (104) einenends der Druck des ungedrosselten Flüssigkeitsstroms wirkt, die Blendenöffnung (112) von dem Schieber (104) getrennt ist und die Drosselung des zu dem Verbraucher (28) fliessenden Flüssigkeitsstromes während der Verstellung des Schiebers (104) aus seiner Modulier- in seine Betriebsstellung unverändert bleibt.

2. Ventil nach Anspruch 1, mit einem zu dem Verbraucher (28) führenden Ausgang (62) und dessen Schieber (104) eine Ringnut (122) aufweist, über die die Druckflüssigkeit zu dem Verbraucher (28) geführt wird, dadurch gekennzeichnet, dass sich die Blendenöffnung (112) in einem eine Axialbohrung (111) aufweisenden hülsenförmigen Ansatz (110) befindet, auf dem der Schieber (104) verstellbar angeordnet ist, und dass die Ringnut (122) mit der Axialbohrung (111) zumindest zeitweise in Verbindung steht und mit dem Ausgang (62) zu dem Verbraucher (28) in Deckung bringbar ist.

3. Ventil nach Anspruch 2, dadurch gekennzeichnet, dass der Schieber (104) an seinem der Axialbohrung (111) zugelegenen Ende eine zu dieser axial ausgerichtete Sackbohrung (130) aufweist, in die die Verbindung mit der Ringnut (122) mündet und die teilweise einen kleineren Durchmesser als der Aussendurchmesser des hülsenförmigen Ansatzes (110) aufweist.

4. Ventil nach Anspruch 2 oder 3 mit einer die von der Pumpe (12) geförderte unter Druck stehende Flüssigkeit dem Ventil (24) zuführenden Leitung (36), dadurch gekennzeichnet, dass die Blendenöffnung (112) in dem hülsenförmigen Ansatz (110) in einem Bereich des Ventils neben einem Stirnende des Schiebers (104) vorgesehen ist und dass dieser Bereich mit der von der Pumpe (12) kommenden Leitung (36) unmittelbar verbunden ist.

5. Ventil nach einem oder mehreren der Ansprüche 2 bis 4, dadurch gekennzeichnet, dass die Blendenöffnung (160) in der Verbindung der Axialbohrung (111) mit der Ringnut (122) vorgesehen ist und eingangsseitig und der Blendenöffnung (160) benachbart jeweils eine im Durchmesser grössere Bohrung (156, 154) in dem hülsenförmigen Ansatz (110) angeordnet ist.

6. Ventil nach einem oder mehreren der Ansprüche 2 bis 5 mit einem zu einem Vorratsbehälter (16) führenden Ausgang (63), dadurch gekennzeichnet, dass der Schieber (104) eine zweite in jeder Schieberstellung mit dem Ausgang (63) für den Vorratsbehälter (16) in Verbindung stehende Ringnut (124) aufweist, über die der Vorratsbehälter (16) mit dem Verbraucher (28) verbindbar ist.

7. Ventil nach einem oder mehreren der Ansprüche 3 bis 6 mit einem die oder eine weitere pumpenseitige Leitung (36) aufnehmenden weiteren Eingang (54), dadurch gekennzeichnet, dass es mit einem zweiten Verbraucher (30) in Verbindung steht und dass der Schieber (104) eine in einer Ausgangsstellung des Schiebers (104) mit dem Eingang (54) der Pumpe (12) und einem Ausgang (64) für den zweiten Verbraucher (30) in Verbindung stehende dritte Ringnut (126) aufweist, während in der Betriebsstellung des Schiebers (104) von dem zweiten Verbraucher (30) zurückfliessende Flüssigkeit über die zweite Ringnut (124) dem Vorratsbehälter (16) zuleitbar ist.

8. Ventil nach einem oder mehreren der Ansprüche 2 bis 7, dadurch gekennzeichnet, dass der hülsenförmige Ansatz (110) als Einschraubteil ausgebildet und gegen andere hülsenförmige Ansätze mit einer grösseren oder einer kleineren Blendenöffnung (112, 160) austauschbar ist.

9. Ventil nach einem oder mehreren der Ansprüche 6 bis 8, dadurch gekennzeichnet, dass die Blendenöffnung (112) in einer Endstellung eines Schiebers (82) eines Hauptsteuerventils (20) mit der Pumpe (12) und in einer zweiten Endstellung des Schiebers (82) über die zweite Ringnut (124) mit dem Vorratsbehälter (16) in Verbindung bringbar ist, wobei der Rückfluss über eine im Hauptsteuerventil (20) vorgesehene Federkammer (98) und eine diese mit der zweiten Ringnut (124) ständig verbindende Leitung (42) erfolgt, die in der die Blendenöffnung (112) mit der Pumpe (12) verbindenden Stellung des Schiebers (82) über eine Ringschulter (92) des Schiebers (82) von einer Pumpenkammer (96) getrennt ist, die von der Ringschulter (92) und einer weiteren Ringschulter (94) gebildet ist und ständig mit der Pumpe (12) und in Abhängigkeit von der Stellung des Hauptsteuerventils (20) mit der Blendenöffnung (112) oder dem Eingang (54) verbunden ist, wobei ferner die weitere Ringschulter (94) eine derartige Länge aufweist, dass sie in der die Blendenöffnung· (112) mit der Pumpenkammer (96) verbindenden Stellung des Hauptsteuerventils (20) die Verbindung der Pumpenkammer (96) mit dem Eingang (54) verschliesst und in dieser Stellung über einen Pilotdruck der Pumpe (12), der gegen die Kraft einer weiteren Feder (22) wirksam ist, gehalten wird, und wobei der Pilotdruck in einer Pilotkammer (100) an dem stirnseitigen Ende der weiteren Ringschulter (94) ansteht, die über die erste Ringschulter (92) mit der Pumpenkammer (96) oder der Federkammer (98) in Abhängigkeit von der Stellung des Hauptsteuerventils (20) verbindbar ist und ein mit der Pumpendruckseite verbundenes Druckbegrenzungsventil (18) aufweist.

## Claims

1. A valve (24) for regulating the flow of fluid from a pump (12) to a load (28) comprising a spool (104), a restrictor opening (112) and a spring (26), wherein the spool (104) is acted upon at one end by the pressure of the flow of fluid and at the other end by the spring (26) and is connected into the flow of fluid, wherein the flow of fluid, in a modulating position of the spool (104), at the beginning of supply to the load (28), is through the restrictor opening (112) and, when an operating pressure is reached at the load (28), in an operating position of the spool (104), is past the restrictor opening (112), characterised in that the spool (104) is subjected ast one end to the pressure of the unthrottled flow of fluid, the restrictor opening (112) is separated from the spool (104) and the throttling of the flow of fluid to the load (28) remains unaltered during displacement of the spool (104) from its modulating into its operating position.

2. A valve according to claim 1 comprising an outlet (62) leading to the load (28), and whose spool (104) has an annular groove (122) by way of which the pressure fluid is passed to the load (28) characterised in that the restrictor opening (112) is disposed in a sleeve-like projection (110) which has an axial bore (111) and on which the spool (104) is displaceably arranged, and that the annular groove (122) is in communication with the axial bore (111) for at least a time and can be brought into alignment with the outlet (62) to the load (28).

3. A valve according to claim 2 characterised in that at its end which is towards the axial bore (111) the spool (104) has a blind bore (130) which is axially aligned therewith and into which the communication with the annular groove (122) opens and which in part is of smaller diameter than the outside diameter of the sleeve-like projection (110).

4. A valve according to claim 2 or claim 3 comprising a conduit (36) which feeds the valve (24) with the pressurised fluid delivered by the pump (12) characterised in that the restrictor opening (112) is provided in the sleeve-like projection (110) in a region of the valve beside an end of the spool (104) and that said region is directly connected to the conduit (36) coming from the pump (12).

5. A valve according to one or more of claims 2 to 4 characterised in that the restrictor opening (160) is provided in the communication of the axial bore (111) with the annular groove (122) and a respective bore (156, 154) of larger diameter is provided in the sleeve-like projection (110) at the inlet side and adjacent the restrictor opening (160) respectively.

6. A valve according to one or more of claims 2 to 5 having an outlet (63) leading to a supply tank (16) characterised in that the spool (104) has a second annular groove (124) which in every position of the spool communicates with the outlet (63) for the supply tank (16) and by way of which the supply tank (16) can be communicated with the load (28).

7. A valve according to one or more of claims 3 to 6 having a further inlet (54) receiving the or a further conduit (36) on the pump side characterised in that it communicates with a second load (30) and that the spool (104) has a third annular groove (126) which in a starting position of the spool (104) communicates with the inlet (54) of the pump (12) and an outlet (64) for the second load (30) while in the operating position of the spool (104) fluid flowing back from the second load (30) can be passed to the supply tank (16) by way of the second annular groove (124).

8. A valve according to one or more of claims 2 to 7 characterised in that the sleeve-like projection (110) is in the form of a screw-in member and can be replaced by other sleeve-like projections with a larger or a smaller restrictor opening (112, 160).

9. A valve according to one or more of claims 6 to 8 characterised in that the restrictor opening (112) in a limit position of a spool (82) of a main control valve (20) can be brought into communication with the pump (12) and in a second limit position of the spool (82) can be brought into communication with the supply tank (16) by way of the second annular groove (124), wherein the return flow is by way of a spring chamber (98) provided in the main control valve (20) and a conduit (42) which is in constant communication with the second annular groove (124) and which, in the position of the spool (82) communicating the restrictor opening (112) with the pump (12), is separated by way of an annular shoulder (92) of the spool (82) from a pump chamber (96) which is formed by the annular shoulder (92) and a further annular shoulder (94) and is in constant communication with the pump (12) and, in dependence on the position of the main control valve (20), with the restrictor opening (112) or the inlet (54), wherein moreover the further annular shoulder (94) is of such a length that in the position of the main control valve (20) communicating the restrictor opening (112) with the pump chamber (96), said further annular shoulder closes the communication of the pump chamber (96) with the inlet (54) and is held in that position by way of a pilot pressure of the pump (12), which pilot pressure is operative against the force of a further spring (22), and wherein the pilot pressure in a pilot chamber (100) occurs against the front end of the further annular shoulder (94) which can be communicated by way of the first annular shoulder (92) with the pump chamber (96) or the spring chamber (98) in dependence on the position of the main control valve (20), and has a pressure limiting valve (18) communicating with the pump pressure side.

**Revendications**

1. Soupage (24) pour régler le débit de liquide d'une pompe (12) vers un dispositif utilisateur (28), comportant un tiroir (104), une ouverture à obturation (112) et un ressort (26), le tiroir (104) étant sollicité à une extrémité par la pression du courant de liquide et, à l'autre extrémité, par le ressort (26) et étant intercalé dans le courant de liquide, le courant de liquide passant, dans une position de modulation du tiroir (104) au début de l'alimentation du dispositif utilisateur (28), par l'ouverture à obturation (112) et évitant lorsqu'une pression de fonctionnement est atteinte sur le dispositif utilisateur (28) dans une position de fonctionnement du tiroir (104), l'ouverture à obturation (112), caractérisée en ce qu'à une extrémité la pression du courant de liquide non étranglé agit sur le tiroir (104), l'ouverture à obturation (112) est séparée du tiroir (104) et l'étranglement du débit de liquide s'écoulant vers le dispositif utilisateur (28) reste inchangé pendant la pessage du tiroir (104) de sa position de modulation à sa position de fonctionnement.

2. Soupape suivant la revendication 1, comportant une sortie (62) aboutissant au dispositif utilisateur (26) et dont le tiroir (104) comporte une rainure annulaire (122) par laquelle le liquide sous pression est guidé vers le dispositif utilisateur (28), caractérisée en ce que l'ouverture à obturation (112) se trouve dans un appendice en forme de douille (110) comportant un alésage axial (111), sur lequel le tiroir (104) est disposé de façon à être mobile, et en ce que la rainure annulaire (122) est en liaison, au moins temporairement, avec l'alésage axial (111) et peut être amenée en coïncidence avec la sortie (62) aboutissant au dispositif utilisateur (28).

3. Soupape suivant la revendication 2, caractérisée en ce que le tiroir (104) comporte, à son extrémité située du côté de l'alésage axial (111), un alésage borgne (130) orienté axialement par rapport à lui, dans lequel débouche le raccordement avec la rainure annulaire (122) et qui présente en partie un diamètre inférieur au diamètre extérieur de l'appendice en forme de douille (110).

4. Soupape suivant la revendication 2 ou 3, comportant une conduite (36) amenant le liquide sous pression débité par la pompe (12) à la soupape (24), caractérisée en ce que l'ouverture à obturation (112) est prévue dans l'appendice en forme de douille (110) dans une zone de la soupape près d'une extrémité frontale du tiroir (104) et en ce que cette zone est reliée directement à la conduite (36) provenant de la pompe (12).

5. Soupape suivant une ou plusieurs des revendications 2 à 4, caractérisée en ce que l'ouverture à obturation (160) est prévue dans le raccordement de l'alésage axial (111) avec la rainure annulaire (122) et en ce qu'il est prévu respectivement du côté d'entrée et au voisinage de l'ouverture à obturation (160), un alésage (156, 154) de plus grand diamètre dans l'appendice en forme de douille (110).

6. Soupape suivant une ou plusieurs des revendications 2 à 5, comportant une sortie (63) aboutissant à un réservoir (16), caractérisée en ce que le tiroir (104) comporte une seconde rainure annulaire (124) en liaison avec la sortie (63) pour le réservoir (16) dans chaque position du tiroir, par laquelle le réservoir (16) peut être relié au dispositif utilisateur (28).

7. Soupape suivant une ou plusieurs des revendications 3 à 6, comportant une autre entrée (54) recevant la conduite (36) ou une autre conduite située du côté de la pompe, caractérisée en ce qu'elle est en liaison avec un second dispositif utilisateur (30) et en ce que le tiroir (104) comporte une troisième rainure annulaire (126) en liaison, dans une position de sortie du tiroir (104) avec l'entrée (54) de la pompe (12) et une sortie (64) pour le second dispositif utilisateur (30), tandis que, dans la position de fonctionnement du tiroir (104), du liquide refluant du second dispositif utilisateur (30) peut être amené au réservoir (16) par la seconde rainure annulaire (124).

8. Soupape suivant une ou plusieurs des revendications 2 à 7, caractérisée en ce que l'appendice en forme de douille (110) est conformé en un composant fileté et peut être remplacé par d'autres appendices en forme de douille d'une ouverture à obturation (112, 160) plus grande ou plus petite.

9. Soupape suivant une ou plusieurs des revendications 6 à 8, caractérisée en ce que l'ouverture à obturation (112) peut, dans une position terminale d'un tiroir (82), d'une soupape de commande principale (20) être amenée en liaison avec la pompe (127) et, dans une seconde position terminale du tiroir (82), par l'intermédiaire de la seconde rainure annulaire (124), avec le réservoir (16), le refluement ayant lieu par l'intermédiaire d'une chambre à ressort (98) prévue dans la soupape de commande principale (20) et d'une conduite (42) la reliant en permanence à la seconde rainure annulaire (124), qui est, dans la position du tiroir (82) reliant l'ouverture à obturation (112) à la pompe (12), séparée, par l'intermédiaire d'un épaulement annulaire (92) du tiroir (82), d'une chambre de pompage (96) qui est formée par l'épaulement annulaire (92) et un autre épaulement annulaire (94) et est reliée en permanence à la pompe (12) et, en fonction de la position de la soupape de commande principale (20) à l'ouverture à obturation (112) ou à l'entrée (54), le second épaulement annulaire (94) présentant, en outre, une longueur telle qu'elle ferme, dans la position de la soupape de commande principale (20) reliant l'ouverture à obturation (112) à la chambre de pompage (96), la liaison de la chambre de pompage (96) avec l'entrée (54) et est maintenue dans cette position au moyen d'une pression-pilote de la pompe (12) qui agit contre la force d'un autre ressort (22), et la pression-pilote étant appliquée, dans une chambre-pilote (100), à l'extrémité frontale de l'autre épaulement annulaire (94) qui peut être relié, par l'intermédiaire du premier épaulement annulaire (92), à la chambre de pompage (96) ou à la chambre à ressort (98) en fonction de la position de la soupape de commande principale (20) et comporte une soupape de limitation de pression (18) reliée au côté de refoulement de la pompe.

FIG.1

FIG. 2

FIG. 3

# FIG. 4

24